(19) Europäisches Patentamt
European Patent Office
Office européen des brevets

(11) **EP 2 538 051 B1**

(12) **FASCICULE DE BREVET EUROPEEN**

(45) Date de publication et mention
de la délivrance du brevet:
**22.04.2015 Bulletin 2015/17**

(51) Int Cl.:
***F01N 11/00*** *(2006.01)*      ***F01N 3/20*** *(2006.01)*

(21) Numéro de dépôt: **11005150.5**

(22) Date de dépôt: **24.06.2011**

(54) **Procédé pour déterminer la quantité d'un agent réducteur dans un réservoir**

Verfahren zur Feststellung der Menge eines Reduktionsmittels in einem Behälter

Method for determining the amount of a reducing agent in a tank

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**26.12.2012 Bulletin 2012/52**

(73) Titulaire: **Aaqius & Aaqius S.A.
1207 Genève (CH)**

(72) Inventeur: **Audouin, Arnaud
75018 Paris (FR)**

(74) Mandataire: **Regimbeau
20, rue de Chazelles
75847 Paris Cedex 17 (FR)**

(56) Documents cités:
**DE-A1-102006 061 370    DE-A1-102008 001 004
DE-A1-102009 047 159    DE-A1-102009 047 475
DE-A1-102009 058 300**

EP 2 538 051 B1

**Description**

L'invention proposée concerne un dispositif de mesure du niveau d'un agent réducteur contenu dans un réservoir.

Les émissions de polluants liées au transport sont depuis près de trente ans un moteur de progrès de premier plan de l'industrie. La sévérisation progressive des limites en émission pour les quatre polluants réglementés (CO, HC, NOx, particules) a permis d'améliorer significativement la qualité de l'air notamment dans les grandes agglomérations.

L'utilisation toujours croissante de l'automobile nécessite de poursuivre les efforts pour réduire encore davantage ces émissions de polluants. Ainsi, la réduction des oxydes d'azote (NOx) reste une problématique complexe dans le contexte de la sévérisation des seuils émission Européen attendu en 2015 pour l'entrée en vigueur de la norme €6. Disposer de technologies de dépollution à forte efficacité dans toutes les conditions de roulage reste un enjeu majeur pour l'industrie du transport.

Dans un deuxième temps, la consommation de carburant, en lien direct avec les émissions de CO2, est devenue une préoccupation majeure. Ainsi, une réglementation sera mise en place au niveau Européen à partir de 2012 sur les émissions de CO2 des véhicules particuliers. Il est d'ores et déjà acquis que cette limite sera régulièrement abaissée au cours des décennies à venir. La réduction de CO2 s'est donc imposée à l'évidence pour toute l'industrie des transports.

Cette double problématique réduction de la pollution locale (NOx) et réduction de la consommation carburant (CO2) est particulièrement difficile pour le moteur Diesel dont la combustion en mélange pauvre s'accompagne d'émission NOx difficile à traiter.

Il existe déjà des dispositifs telles que celui décrit dans EP1977817 permettant la réduction de la quantité de NOx au moyen d'un catalyseur SCR (*Selective Catalytic Reduction*) utilisant de l'ammoniac stocké dans un matériau de stockage du type sels chlorures d'alcalino-terreux agencé à l'intérieur d'un réservoir. L'injection d'ammoniac dans les gaz d'échappements est pilotée grâce à un dispositif de chauffage permettant de chauffer le matériau de stockage afin de permettre la réaction réversible d'absorption/désorption de l'ammoniac puisque cette réaction est directement liée à la température au sein du matériau de stockage.

Un autre dispositif similaire est divulgué dans le document DE102009047475.

En pratique, l'ammoniac est injecté à l'échappement en continu dans les proportions stoechiométriques de la réaction de réduction des NOx. Il convient donc de pouvoir stocker à bord une quantité suffisante d'ammoniac. Pour limiter l'encombrement du réservoir contenant le matériau de stockage, les constructeurs automobiles privilégient un remplissage ou un remplacement du réservoir périodiquement, par exemple lors de la maintenance moteur (vidange) ou lors d'un remplissage réservoir carburant. Selon les véhicules considérés (véhicules particuliers, poids lourds...) il est nécessaire de prévoir entre 10 et 100 opérations de remplissage du réservoir ou de remplacement de celui-ci pendant la durée de vie du véhicule.

Cette opération de maintenance périodique, nécessaire pour assurer une dépollution efficace des NOx pendant toute la vie du véhicule, fait l'objet de réglementations spécifiques dans les différents pays ou la technologie SCR est utilisée. Un point commun à toutes ces réglementations est la nécessité de pouvoir déterminer la quantité d'ammoniac restant dans le réservoir pour pouvoir avertir le conducteur lorsqu'un remplissage doit être fait. Par exemple, dans la législation Européenne pour les véhicules particuliers, il est nécessaire de pouvoir mesurer au minimum deux seuils d'autonomie restante, à 2400 km et 800km (correspondant approximativement à respectivement 3 pleins et 1 plein de carburant).

Par ailleurs, dans le cas où plusieurs réservoirs comportant chacun un matériau de stockage de l'ammoniac sont embarqués dans le véhicule afin de simplifier l'intégration du système de stockage d'ammoniac dans le véhicule, ou pour en améliorer son fonctionnement (introduction d'une unité à froid), il est nécessaire de connaître la quantité restante d'ammoniac dans chaque réservoir afin que le calculateur moteur puisse piloter de manière optimale l'injection de l'ammoniac contenu dans ces différents réservoir.

Ainsi, le but de la présente invention est de proposer un moyen de déterminer la quantité d'un agent réducteur, de préférence de l'ammoniac, contenu dans un réservoir. Conformément à l'invention, ce but est atteint grâce à un procédé pour déterminer la quantité d'un agent réducteur dans un réservoir d'un système destiné à réduire la quantité de NOx dans les gaz d'échappement d'un véhicule à moteur. Le système comporte:

- un matériau de stockage agencé dans le réservoir et capable de stocker et libérer l'agent réducteur de façon réversible en fonction de la demande en agent réducteur qui peut varier au cours du temps;
- un dispositif de chauffe agencé pour fournir de la chaleur pour libérer l'agent réducteur du matériau de stockage; et
- un dispositif de commande pour piloter le dispositif de chauffe afin de libérer l'agent réducteur.

Le procédé selon l'invention comporte les étapes suivantes:

a) dès le démarrage du véhicule à moteur, piloter le dispositif de chauffe de manière à ce que celui-ci délivre une puissance de profil prédéterminé durant une phase dite initiale pendant laquelle la pression à l'intérieur du réservoir augmente jusqu'à ce qu'elle atteigne une valeur seuil, le pilotage du dispositif de chauffe étant ensuite adapté afin de réguler la pression autour d'une valeur de consigne;

b) mesurer le temps de la phase initiale et/ou la dérivée temporelle en pression au cours de toute ou une partie de cette phase initiale; et

c) comparer le temps de la phase initiale, la dérivée temporelle en pression ou une combinaison des deux à différentes valeurs calibrées qui correspondent à différents taux de remplissage de l'agent réducteur dans le réservoir afin de déterminer la quantité de l'agent réducteur dans ledit réservoir.

Les caractéristiques de l'invention apparaitront plus clairement à la lecture de la description d'une forme d'exécution préférentielle, donnée uniquement à titre d'exemple, nullement limitative en se référant aux figures schématiques dans lesquelles:

- La Figure 1 représente une architecture fonctionnelle du système de stockage et d'alimentation en ammoniac;
- La Figure 2 illustre l'évolution de la pression dans le réservoir ainsi que le débit en ammoniac au cours des phases initiale et de régulation du système;
- La Figure 3 illustre l'évolution de la pression à l'intérieur du réservoir en fonction de trois taux de remplissage du réservoir en agent réducteur;
- La Figure 4 illustre la dérivée temporelle de la pression à l'intérieur du réservoir selon la Figure 3 en fonction des trois taux de remplissage du réservoir en agent réducteur;
- La figure 5 représente une cartographie du temps de montée en pression en fonction de la température ambiante pour trois taux de remplissage du réservoir en agent réducteur, et
- La figure 6 représente une cartographie de la dérivée temporelle en pression en fonction et de la température ambiante pour les trois taux de remplissage du réservoir en agent réducteur.

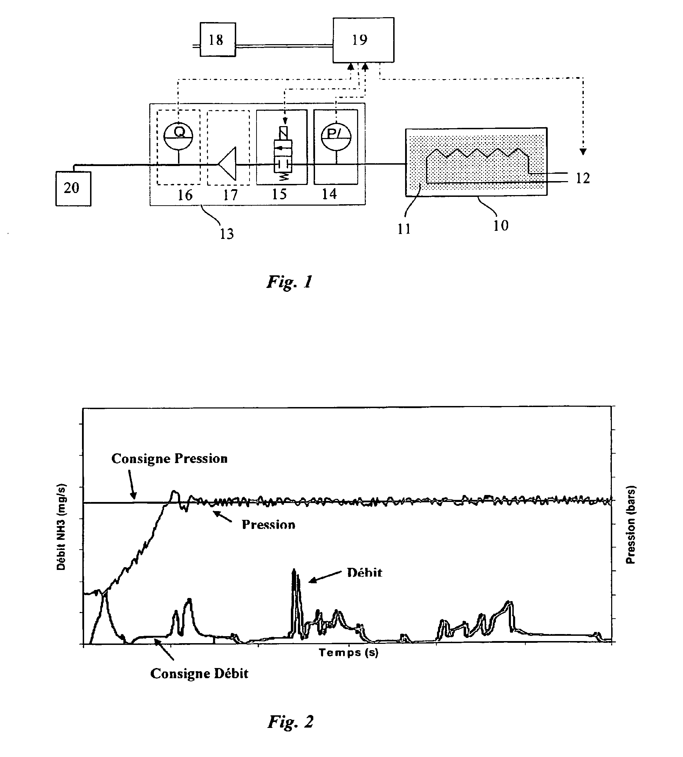

Le système pour la mise en oeuvre du procédé selon l'invention comporte selon la Figure 1 un réservoir 10 contenant un matériau de stockage 11 dans lequel est stocké de préférence de l'ammoniac pour la réduction des NOx dans les gaz d'échappement d'un véhicule à moteur. Un dispositif de chauffe 12 est agencé pour fournir de la chaleur au matériau de stockage 11 afin que l'ammoniac puisse être désorbé de celui-ci puis injecté dans les gaz d'échappement. Le dispositif de chauffe 12 est sous forme de résistance électrique mais peut également être sous la forme d'un échangeur de chaleur alimenté par un fluide caloporteur tel que le liquide de refroidissement du moteur ou les gaz d'échappement du véhicule à moteur.

Le système comporte en outre un dispositif de commande 13 qui permet, selon la Figure 2, d'une part la régulation de la pression à l'intérieur du réservoir 10 autour d'une valeur consigne et d'autre part le dosage de l'ammoniac pour qu'il puisse être injecté en continu dans les gaz d'échappement du véhicule à moteur dans les proportions stoechiométriques de la réaction de réduction des NOx.

La consigne de pression est déterminée de façon dynamique en fonction d'une analyse d'un certain nombre de paramètres moteur et véhicule, comme par exemple la concentration de NOx émis à chaque instant, la température du lubrifiant moteur, la température du liquide de refroidissement moteur, la vitesse du véhicule, le régime moteur, la charge motrice ou une combinaison de ces paramètres.

Le dispositif de commande 13 comporte de préférence un capteur de pression 14 agencé pour mesurer la pression à l'intérieur du réservoir 10 et un doseur 15 des gaz d'ammoniac tel qu'une électrovanne. Le capteur de température peut remplacer le capteur en pression, la pression étant déterminée par calcul. Un débitmètre 16 pour la mesure en débit d'ammoniac est, de préférence, ajouté à la sortie du doseur 15. Celui-ci comporte également à sa sortie un col sonique 17 permettant d'atténuer les oscillations de pression. Au moins certains des paramètres du paragraphe précédent sont traités dans un contrôleur électronique 18 relié au calculateur moteur 19, afin que le contrôleur 18 puisse piloter le dispositif de chauffe 12 de façon à obtenir une pression de consigne qui soit représentative des conditions de roulage du véhicule moteur. Lorsqu'une pression à l'intérieur du réservoir 10 suffisamment élevée et suffisamment stable est générée, le doseur 15 bouclé sur le débitmètre 16 permet d'injecter l'ammoniac dans les gaz échappement du véhicule à moteur au moyen d'un module d'injection 20 selon le débit calculé par le calculateur 19.

Selon la forme préférentielle de l'invention, le dispositif de chauffe 12 est piloté de façon à ce qu'il délivre sa puissance maximale pour accélérer la montée en pression à l'intérieur du réservoir 10, et ceci après le démarrage du véhicule à moteur lorsque les conditions sont favorables et uniquement pendant une phase dite initiale précédant une phase dite de régulation de la pression à l'intérieur du réservoir 10 autour d'une consigne de pression dont la valeur est calculée par plusieurs paramètres déjà évoqués plus haut. Selon une variante, le dispositif de chauffe est piloté de manière à ce qu'il délivre une puissance de profil prédéterminé durant la phase initiale, c'est-à-dire que la puissance n'est pas constante mais varie selon une courbe prédéterminée.

Lorsque la pression à l'intérieur du réservoir 10 approche de la valeur de consigne, le calculateur 19 pilote la puissance du dispositif de chauffe 12 pour réguler la pression à l'intérieur du réservoir 10 autour de la pression de consigne calculée.

Le temps nécessaire, à compter du démarrage du véhicule, pour que la pression à l'intérieur du réservoir 10 approche la valeur de consigne dépend de plusieurs paramètres, notamment de:

- la pression initiale dans le réservoir 10 au démarrage du véhicule à moteur, en lien avec la température ambiante et le temps passé depuis l'arrêt du véhicule;

- la puissance du dispositif de chauffe 12;

- la conductivité thermique du matériau de stockage 11.

La conductivité thermique des sels chlorures métalliques étant faible, un liant de type graphite naturel expansé est ajouté au sel.

Le taux de remplissage en ammoniac du matériau a également une répercussion sur la montée de la pression à l'intérieur du réservoir 10. En effet, lorsque le matériau de stockage 11 est totalement saturé en ammoniac, la chaleur transmise par le dispositif de chauffe 12 est immédiatement disponible pour élever la température des complexes ammoniacates qui se trouvent à proximité, ce qui a pour conséquence une augmentation de la pression au sein du réservoir 10. Lorsque le matériau de stockage 11 se vide en ammoniac, la chaleur doit être transmise au sein du matériau jusqu'aux complexes ammoniacates plus éloignés du dispositif de chauffe 12. Il en résulte une évolution de la pression plus lente à mesure que le matériau 11 se vide en ammoniac. De plus, en raison de la contraction volumique dudit matériau 11 lors de la désorption de l'ammoniac, sa conductivité thermique diminue progressivement à mesure que le réservoir se vide en ammoniac.

Au vu de ce qui précède, le taux de remplissage du réservoir 10 en ammoniac est évalué de préférence par trois opérations réalisées successivement à chaque démarrage moteur, à savoir:

- une opération consistant à vérifier si les conditions sont favorables pour l'évaluation de la quantité en ammoniac dans le réservoir;
- une opération consistant d'une part à mesurer le temps de la montée en pression à l'intérieur du réservoir 10 et d'autre part déterminer la dérivée temporelle de la pression qui en résulte; et
- une opération consistant à déterminer la quantité de l'ammoniac dans le réservoir en fonction du temps de montée en pression et de la dérivée temporelle de la pression.

L'opération consistant à vérifier si les conditions sont favorables pour l'évaluation de la quantité en ammoniac dans le réservoir à pour objectif de sélectionner les cas représentatifs pour la mesure de la montée en pression dans le réservoir 10 au cours de la phase initiale. Une consigne positive est transmise lorsque deux conditions sont satisfaites.

La première condition est de s'assurer que les conditions initiales sont stabilisées afin que le réservoir 10 soit revenu à un état de température et de pression stabilisés après le roulage précédent (pas de gradient de température dans le matériau). Pour cela, la mesure de pression au démarrage du système (P0: pression initiale) sera comparée à la pression d'équilibre attendue (Pamb) dans l'enceinte de stockage à la température ambiante. Cette pression attendue est calculée en utilisant la mesure de la température ambiante (Tamb) disponible dans le calculateur moteur 19 par la relation de Clausius-Clapeyron ci-dessous dans laquelle $\Delta Hr$ et $\Delta Sr$ sont caractéristiques du matériau employé et R la constante des gaz parfaits.

$$\ln P_{amb} = \frac{-\Delta Hr}{R \times T_{amb}} + \frac{\Delta Sr}{R}$$

Lorsque la pression initiale P0 mesurée au démarrage est trop différente de la pression attendue Pamb, les conditions ne sont pas favorables pour une évaluation pertinente, la consigne est négative. En pratique, la pression et la température à l'intérieur du réservoir 10 sont considérées comme stabilisées si: $0.7 \times Pamb < Po < 1.3 \times P_{amb}$. Une valeur plus restrictive peut être envisagée de l'ordre de $0.8 \times Pamb < Po < 1.2 \times P_{amb}$

La seconde condition est que la phase de montée en pression (phase initiale) doit se dérouler normalement. Le but est d'éliminer les cas où la phase de montée en pression n'a pu se faire dans les conditions représentatives, c'est-à-dire pour une puissance maximale constante pendant toute la durée de la montée en pression. C'est par exemple le cas lors d'un arrêt moteur pendant la montée en pression ou lors d'une disponibilité insuffisante en énergie électrique (charge batterie).

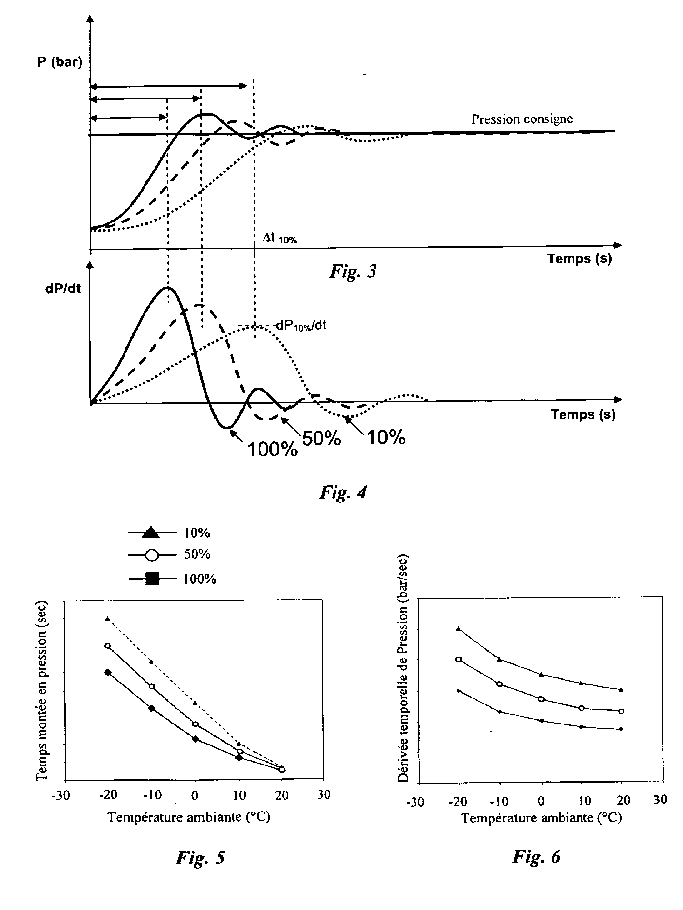

L'évolution de la pression au sein du réservoir 10 durant la phase initiale précédant la phase de régulation de ladite pression autour d'une valeur de consigne est schématisée sur le graphique de la Figure 3 pour trois différents taux de remplissage en ammoniac du matériau de stockage et par conséquent du réservoir qui incorpore ledit matériau. Plus particulièrement, l'évolution de la pression au sein du réservoir durant ladite phase initiale est schématisée pour un taux de remplissage du réservoir en ammoniac qui est respectivement de 100%, 50% et 10%. On constate, selon la Figure 3, qu'à mesure que le matériau de stockage se vide en ammoniac, la montée en pression au cours de la phase initiale est plus lente.

Selon le graphique de la Figure 4, dans lequel est représenté l'évolution de la dérivée temporelle de la pression en fonction des trois taux de remplissage du réservoir, cette dérivée temporelle augmente progressivement jusqu'au basculement dans la phase de régulation. La valeur de la dérivée temporelle diminue à mesure que le matériau de stockage se vide en ammoniac.

L'évaluation de l'autonomie est déterminée une ou deux cartographies. L'une des cartographies représente le temps de montée en pression à l'intérieur du réservoir au cours de la phase initiale selon la température ambiante et en fonction du taux de remplissage du réservoir 10 en ammoniac (Figure 5). L'autre des cartographies représente non pas le temps de montée en pression mais la dérivée temporelle de la pression (Figure 6).

Dans la présente invention, lorsque des conditions favorables sont sélectionnées, les valeurs $\Delta t$ et/ou dp/dt mesurées au cours de la phase initiale permettent d'évaluer l'autonomie restante par l'une ou l'autre ou les deux cartographies caractéristiques du système considéré et pour la pression initiale mesurée au démarrage moteur. Ainsi, il est possible de définir par calibration pour le réservoir considéré la quantité d'ammoniac dans le réservoir.

Plus particulièrement, les valeurs calibrées des cartographies sont comparées aux valeurs $\Delta t$ et dp/dt mesurées au cours de la phase initiale afin de déterminer la quantité de l'ammoniac dans le réservoir. Les figures 5 et 6 représentent uniquement des valeurs calibrées pour trois différents taux de remplissage du réservoir. Afin d'améliorer la précision de l'estimation de la quantité d'ammoniac dans le réservoir, il est souhaitable de calibrer le réservoir considéré pour au moins dix différents taux de remplissage.

Un intérêt du procédé selon l'invention est le grand nombre de mesure disponible (quasiment une après chaque démarrage). Une limite de cette évaluation par cartographie est la faible précision de l'estimation de la quantité d'ammoniac, en particulier dans les cas où la pression initiale est proche de la pression de consigne (par exemple, pour une température ambiante entre 20 et 30°C).

Pour cette raison, l'estimation du taux d'ammoniac dans le réservoir 10 est de préférence déterminée à partir de la mesure régulière des deux paramètres «temps de montée en pression» et «dérivée temporelle de pression». Dans une configuration privilégiée de l'invention, les valeurs aberrantes, c.a.d. trop éloignées des mesures précédentes (par exemple des 5 à 10 mesures précédentes) seront écartées. Une information sur la quantité d'ammoniac dans le réservoir sera recalculée comme la moyenne glissante des X dernières mesures (compris entre 5 et 50) pour chacune des 2 mesures « temps de montée en pression » et « dérivée temporelle de pression » en pondérant chacune des mesures de la moyenne d'un poids d'autant plus fort que la température ambiante est faible (mesure plus précise à basse température ambiante).

Enfin, l'information sur la quantité d'ammoniac dans le réservoir transmise au reste du système sera de préférence calculée comme la valeur moyenne de ces deux informations issues des mesures « temps de montée en pression » et «dérivée temporelle de pression ».

**Revendications**

1.  Procédé pour déterminer la quantité d'un agent réducteur dans un réservoir (10) d'un système destiné à réduire la quantité de NOx dans les gaz d'échappement d'un véhicule à moteur, ledit système comportant:

    - un matériau de stockage (11) agencé dans le réservoir (10) et capable de stocker et libérer l'agent réducteur en fonction de la demande en agent réducteur qui peut varier au cours du temps;
    - un dispositif de chauffage (12) agencé pour fournir de la chaleur pour libérer l'agent réducteur du matériau de stockage (11), et
    - un dispositif de commande (13) pour piloter le dispositif de chauffe (12) afin de libérer l'agent réducteur,

    **caractérisé en ce que** le procédé comporte les étapes suivantes:

    a) dès le démarrage du véhicule à moteur, piloter le dispositif de chauffe (12) de manière à ce que celui-ci délivre une puissance de profil prédéterminé durant une phase dite initiale pendant laquelle la pression à l'intérieur du réservoir (10) augmente jusqu'à ce qu'elle atteigne une valeur seuil, le pilotage du dispositif de chauffe (12) étant ensuite adapté afin de réguler la pression autour d'une valeur de consigne;

b) mesurer le temps de la phase initiale et/ou la dérivée temporelle en pression au cours de toute ou une partie de cette phase initiale; et

c) comparer le temps de la phase initiale, la dérivée temporelle en pression ou une combinaison des deux à différentes valeurs calibrées qui correspondent à différents taux de remplissage de l'agent réducteur dans le réservoir (10) afin de déterminer la quantité de l'agent réducteur dans ledit réservoir (10).

**2.** Procédé selon la revendication 1, **caractérisé en ce que** le temps de la phase initiale est comparé à différentes valeurs calibrées de ladite phase initiale selon la quantité de l'agent réducteur dans le réservoir (10).

**3.** Procédé selon la revendication 1, **caractérisé en ce que** la dérivée temporelle en pression au cours de toute ou une partie de la phase initiale est comparée à différentes valeurs calibrées de ladite dérivée temporelle en pression selon la quantité de l'agent réducteur dans le réservoir (10).

**4.** Procédé selon la revendication 1, **caractérisé en ce qu'**une valeur combinée est obtenue par le temps mesuré de la phase initiale combiné à la dérivée temporelle en pression au cours de toute ou une partie de la phase initiale, cette valeur combinée étant comparée à différentes valeurs calibrées de ladite valeur combinée selon la quantité de l'agent réducteur dans le réservoir (10).

**5.** Procédé selon la revendication 4, **caractérisé en ce qu'**une première moyenne glissante calculée pour au moins les cinq dernières mesures du temps de la phase initiale alors qu'une seconde moyenne glissante est calculée pour au moins les cinq dernières mesures de la dérivée temporelle en pression, chacune des mesures de chaque moyenne glissante étant pondérée d'une valeur d'autant plus grande que la température ambiante à laquelle la mesure a été effectuée est faible, la première moyenne glissante étant combinée à la seconde moyenne glissante afin d'obtenir ladite valeur combinée.

**6.** Procédé selon l'une quelconque des revendications précédentes, **caractérisé en ce que** le dispositif de chauffe (12) est piloté de manière à ce qu'il délivre une puissance constante durant ladite phase initiale.

**7.** Procédé selon l'une quelconque des revendications précédentes, **caractérisé en ce qu'**il comporte une étape supplémentaire précédent l'étape a), qui consiste à déterminer si, au démarrage du véhicule à moteur, la pression et la température à l'intérieur du réservoir (10) sont stabilisées.

**8.** Procédé selon la revendication 7, dans lequel au cours de ladite étape supplémentaire la pression initiale (Po) à l'intérieur du réservoir (10) est mesurée puis est comparée à une pression d'équilibre ($P_{amb}$), la pression et la température à l'intérieur du réservoir (10) étant onsidérées comme stabilisées si:

$$0.7 \times Pamb < Po < 1.3 \times P_{amb}.$$

**9.** Procédé selon la revendication 7, dans lequel la pression d'équilibre ($P_{amb}$) est calculée par la relation:

$$\ln P_{amb} = \frac{-\Delta Hr}{R \times T_{amb}} + \frac{\Delta Sr}{R}$$

où: $\ln P_{amb}$ est le logarithme naturel de $P_{amb}$

$\Delta Hr$ est l'enthalpie et $\Delta Sr$ l'entropie de formation du complexe agent réducteur/matériau de stockage pour la stoechiométrie considérée,
R est la constante des gaz parfait, et
$T_{amb}$ est la température ambiante.

**Patentansprüche**

1. Verfahren zur Ermittlung der Menge eines Reduktionsmittels in einem Behälter (10) eines Systems, das konfiguriert ist, die $NO_x$-Menge in den Auspuffgasen eines Motorfahrzeugs zu verringern, wobei das System aufweist:

   - ein in dem Behälter (10) angeordnetes Speichermaterial (11), das in Abhängigkeit von dem Reduktionsmittelbedarf, der zeitlich variieren kann, das Reduktionsmittel speichern und freisetzen kann;
   - eine Heizvorrichtung (12) zur Bereitstellung von Wärme, um das Reduktionsmittel aus dem Speichermaterial (11) freizusetzen; und
   - eine Steuervorrichtung (13) zur Steuerung der Heizvorrichtung (12), um das Reduktionsmittel freizusetzen, **dadurch gekennzeichnet, dass** das Verfahren die folgenden Schritte aufweist:

     a) Steuern der Heizvorrichtung (12) beim Starten des Motorfahrzeugs, so dass diese während einer sogenannten Anfangsphase, in welcher der Druck im Innern des Behälters (10) bis zum Erreichen eines Schwellenwerts ansteigt, eine Leistung eines vorgegebenen Profils bereitstellt, wobei anschließend der Steuerungsprozess der Heizvorrichtung (12) angepasst wird, um den Druck um einen Sollwert herum zu regeln;
     b) Messen der Zeitdauer der Anfangsphase und/oder der zeitlichen Ableitung des Drucks im Verlaufe der gesamten oder eines Teils der Anfangsphase; und
     c) Vergleichen der Zeitdauer der Anfangsphase, der zeitlichen Ableitung des Drucks oder einer Kombination dieser beiden Werte mit verschiedenen kalibrierten Werten, die unterschiedlichen Füllgraden des Reduktionsmittels in dem Behälter (10) entsprechen, um die Menge des Reduktionsmittels in dem Behälter (10) zu ermitteln.

2. Verfahren nach Anspruch 1, **dadurch gekennzeichnet, dass** die Zeitdauer der Anfangsphase verglichen wird mit verschiedenen kalibrierten Werten der Anfangsphase, um die Menge des Reduktionsmittels in dem Behälter (10) zu ermitteln.

3. Verfahren nach Anspruch 1, **dadurch gekennzeichnet, dass** die zeitliche Ableitung des Drucks im Verlaufe der gesamten oder eines Teils der Anfangsphase verglichen wird mit ver
schiedenen kalibrierten Werten der zeitlichen Ableitung des Drucks, um die Menge des Reduktionsmittels in dem Behälter (10) zu ermitteln.

4. Verfahren nach Anspruch 1, **dadurch gekennzeichnet, dass** ein kombinierter Wert gewonnen wird aus der gemessenen Zeitdauer der Anfangsphase kombiniert mit der zeitlichen Ableitung des Drucks im Verlaufe der gesamten oder eines Teils der Anfangsphase, wobei dieser kombinierte Wert verglichen wird mit verschiedenen kalibrierten Werten des kombinierten Werts, um die Menge des Reduktionsmittels in dem Behälter (10) zu ermitteln.

5. Verfahren nach Anspruch 4, **dadurch gekennzeichnet, dass** aus mindestens den letzten fünf Messungen der Zeitdauer der Anfangsphase ein erster gleitender Mittelwert berechnet wird sowie aus mindestens den letzten fünf Messungen der zeitlichen Ableitung des Drucks ein zweiter gleitender Mittelwert berechnet wird, wobei jeder Messwert jedes gleitenden Mittelwerts mit einem Wert gewichtet wird, der umso größer ist je niedriger die Umgebungstemperatur ist, bei welcher die Messung durchgeführt wurde, wobei der erste gleitende Mittelwert mit dem zweiten gleitenden Mittelwert kombiniert wird, um den kombinierten Wert zu gewinnen.

6. Verfahren nach einem der vorstehenden Ansprüche, **dadurch gekennzeichnet, dass** die Heizvorrichtung (12) so gesteuert wird, dass sie während der Anfangsphase eine konstante Leistung bereitstellt.

7. Verfahren nach einem der vorstehenden Ansprüche, **dadurch gekennzeichnet, dass** es vor dem Schritt a) einen zusätzlichen Schritt aufweist, der darin besteht, zu ermitteln, ob beim Starten des Motorfahrzeugs der Druck und die Temperatur im Innern des Behälters (10) stabilisiert sind.

8. Verfahren nach Anspruch 7, in welchem im Verlaufe des zusätzlichen Schritts der Anfangsdruck ($P_0$) im Innern des Behälters (10) gemessen wird, dann mit einem Gleichgewichtsdruck ($P_{amb}$) verglichen wird, wobei der Druck und die Temperatur im Innern des Behälters (10) als stabilisiert zu betrachten sind, wenn

$$0{,}7*P_{amb}<P_0<1{,}3*P_{amb}$$

ist.

9. Verfahren nach Anspruch 7, in welchem der Gleichgewichtsdruck ($P_{amb}$) aus der Beziehung

$$\ln P_{amb} = \frac{-\Delta Hr}{R \times T_{amb}} + \frac{\Delta Sr}{R}$$

berechnet wird, wobei

$\ln P_{amb}$ der natürliche Logarithmus von $P_{amb}$ ist,
$\Delta Hr$ die Enthalpie und $\Delta Sr$ die Entropie der Bildung des Reduktionsmittel/Speichermaterial-Komplexes für die betrachtete Stöchiometrie ist,
R die Gaskonstante für ideale Gase ist und
$T_{amb}$ die Umgebungstemperatur ist.

**Claims**

1. Method for determining the quantity of a reducing agent in a tank (10) of a system intended to reduce the quantity of NOx in the exhaust gases of a motor vehicle, said system including:

   - a storage material (11) arranged in the tank (10) and capable of storing and releasing the reducing agent according to the demand for the reducing agent which may vary over the course of time;
   - a heating device (12) designed to supply heat in order to release the reducing agent from the storage material (11), and
   - a control device (13) for control of the heating device (12) in order to release the reducing agent,

   **characterised in that** the method includes the following steps:

   a) as soon as the motor vehicle is started, control the heating device (12) so that it delivers a determined power profile during a phase known as the initial phase over which the pressure inside the tank (10) increases until it reaches a threshold value, control of the heating device (12) then being adapted in order to regulate the pressure around a set value;
   b) measure the time of the initial phase and/or the derivative of the pressure with respect to time during some or all of this initial phase;
   c) compare the time of the initial phase, the derivative of the pressure with respect to time or a combination of both with various calibrated values corresponding to different filling ratios of the reducing agent in the tank (10) in order to determine the quantity of reducing agent in said tank (10).

2. Method according to claim 1, **characterised in that** the time for the initial phase is compared with the different calibrated values of said initial phase depending on the quantity of reducing agent in the tank (10).

3. Method according to claim 1, **characterised in that** the derivative of pressure with respect to time during some or all of the initial phase is compared with different calibrated values of said derivative of pressure with respect to time depending on the quantity of reducing agent in the tank (10).

4. Method according to claim 1, **characterised in that** a combined value is obtained by the time measured in the initial phase combined with the derivative of pressure with respect to time during some or all of the initial phase, this combined value being compared with different calibrated values of said combined value depending on the quantity of reducing agent in the tank (10).

5. Method according to claim 4, **characterised in that** a first sliding mean is calculated for at least the last five time measurements of the initial phase while a second sliding mean is calculated for at least the last five measurements of the derivative of pressure with respect to time, each of the measurements of each sliding mean being weighted by a value that increases as the ambient temperature at which the measurement was made reduces, the first sliding mean being combined with the second sliding mean in order to obtain said combined value.

6. Method according to any one of the previous claims, **characterised in that** the heating device (12) is controlled such that it outputs a constant power during said initial phase.

7. Method according to any one of the previous claims, **characterised in that** it comprises an additional step preceding step a) that consists of determining whether or not the pressure and temperature inside the tank (10) have stabilised when the motor vehicle starts.

8. Method according to claim 7, in which, during said additional step, the initial pressure (Po) inside the tank (10) is measured and is then compared with an equilibrium pressure ($P_{amb}$), the pressure and temperature inside the tank (10) being considered as stabilised if:

$$0.7 \ x \ Pamb \ < \ Po \ < \ 1.3 \ X \ P_{amb}$$

9. Method according to claim 7, in which the equilibrium pressure ($P_{amb}$) is calculated by the following relation:

$$\ln P_{amb} = \frac{-\Delta Hr}{R \times T_{amb}} + \frac{\Delta Sr}{R}$$

where:

ln $P_{amb}$ is the natural logarithm of $P_{amb}$ $\Delta Hr$ is the enthalpy and $\Delta Sr$ is the entropy of formation of the reducing agent/storage material complex for the stoichiometry considered,
R is the perfect gas constant, and
$T_{amb}$ is the ambient temperature.

**Fig. 1**

**Fig. 2**

**Fig. 3**

**Fig. 4**

**Fig. 5**

**Fig. 6**

## RÉFÉRENCES CITÉES DANS LA DESCRIPTION

**Documents brevets cités dans la description**

- EP 1977817 A

- DE 102009047475